# EUROPEAN PATENT APPLICATION

(11) **EP 4 838 404 A1**
(43) Date of publication of application: **11.11.2026**
(21) Application number: 25305661.8
(22) Date of filing: 09.05.2025
(51) Int. Cl.: G06F 40/30, G06N 3/0475

(54) **NATURAL LANGUAGE COMPRESSION**

(71) Applicant: Amadeus S.A.S., 06410 Biot (FR)
(72) Inventor: AVRANAS, Apostolos, 06000 Nice (FR); THOMAS, Eoin, 06600 Antibes (FR); CAO, Hongliu, 06300 Nice (FR); YOGESH NAIR, Aditya, 06000 Nice (FR)
(74) Representative: Samson & Partner Patentanwälte mbB

(57) **Abstract**

A method for natural language text compression is presented. The method comprises receiving an input of a natural language text, processing the natural language text with a subset of layers of a language model, extracting an internal representation of tokens of the input from the subset of layers of the language model, determining tokens to be removed from the input by applying a token classifier to the internal representation of each token, and determining a compressed natural language text comprising only tokens not determined to be removed. Corresponding computing system and computer-program are presented, too.

## Description

### FIELD

The present invention relates to natural language processing, specifically to methods and systems for compressing text inputs for large language models.

### BACKGROUND

Natural language processing (NLP) is a specialized domain within artificial intelligence that concentrates on facilitating interactions between computers and humans using natural language. This field involves crafting algorithms and models that empower machines to comprehend, interpret, and generate human language. NLP spans a diverse array of applications, such as language translation, sentiment analysis, text summarization, and chatbots. The foundational mechanisms of NLP frequently employ large language models (LLMs), which are trained on extensive text datasets to predict and produce human-like text. These models leverage intricate architectures, like transformers, to adeptly process and analyze language data.

Within the scope of NLP, a primary goal is to augment the efficiency and effectiveness of language models in managing substantial volumes of text. This encompasses enhancing the speed and precision of tasks like document summarization, information retrieval, and conversational AI. The capability to process extensive text inputs is important for applications such as coding assistance, documentation generation, and chatbots, where the context and history of interactions can be extensive. Furthermore, there is an increasing focus on minimizing the computational cost and energy consumption associated with processing large text inputs, as these factors significantly influence the sustainability and scalability of NLP solutions.

Several challenges impede the realization of these objectives. Although large language models are potent, they are constrained by their ability to efficiently process lengthy text inputs. The computational cost, in terms of both energy and financial resources, escalates with the size of the input text. Additionally, these models have inherent limitations on the maximum text length they can handle, resulting in performance degradation when these limits are surpassed. This situation highlights the pressing need for methods that can manage and reduce input size without sacrificing output quality.

The method for optimizing storage and processing of language text comprise methods to find cue words using compression technology, with the goal of enhancing prompt words through compression. However, these approaches involve complex processes that may not be suitable for real-time applications due to their resource-intensive nature. Additionally, the approach may not adapt well to different applications, which could limit its scalability and practicality. Other approaches for text compression depend on fine-tuned models, which can be computationally demanding and may not be readily adaptable to different models or applications. The requirement for fine-tuning also adds to the complexity and cost of implementation.

The solution described herein specifically addresses the need for a streamlined and versatile solution for compressing text inputs in NLP applications. Existing methods, as delineated in previous work, often entail resource-intensive processes unsuitable for real-time applications. They may also necessitate fine-tuning, which limits their adaptability and heightens computational costs. The described methods and systems aim to overcome these limitations by efficiently compressing text inputs while preserving output quality, thereby enhancing the sustainability and speed of language model operations.

### SUMMARY

In this context, according to a first aspect, a method for natural language text compression is provided. The method comprises receiving an input of a natural language text and processing the natural language text with a subset of layers of a language model. The method further comprises extracting an internal representation of tokens of the input from the subset of layers of the language model and determining tokens to be removed from the input by applying a token classifier to the internal representation of each token. The method also includes determining a compressed natural language text comprising only tokens not determined to be removed. A corresponding computing system and computer program are provided, too.

In some embodiments, the language model is a pre-trained machine learning model. In some further embodiments, the language model is a transformer-based language model. In yet further embodiments, the internal representation of the input is extracted by extracting features based on the attention maps generated by the output of at least one subset of layers in the transformer-based language model when the transformer-based language model processes the tokens of the input. In some embodiments, extracting features comprises determining per column or per row of the attention maps for different layers a value of at least one of minimum, maximum, mean, standard deviation, and entropy.

In embodiments, the method further comprises transmitting the compressed natural language text to a pre-trained large language model as input instead of the natural language text. In some embodiments, the token classifier is a machine learning classification model. In some further embodiments, the token classifier is a random forest machine learning model. In yet further embodiments, the method further comprises training the token classifier in a supervised manner by annotating tokens to be removable while conveying the information provided by the natural language text. In some embodiments, the token classifier is continuously trained based on feedback of the language model.

In embodiments, the token classifier provides a probability of a token being required to convey the information provided by the natural language text. In some embodiments, the method further comprises, for determining the compressed natural language text, removing, in response to the probability of the token being required to convey the information being smaller than a threshold, the token from the natural language text. In some further embodiments, the threshold is definable by a user or automatically defined depending on an intended usage of the compressed natural language text.

According to a second aspect, a computing system for natural language text compression is provided, which comprises at least one memory storing a subset of layers of a language model and a token classifier, and at least one processor. The at least one memory comprises instructions that, when executed by the at least one processor, cause the at least one processor to execute the methods as described herein.

According to a third aspect, a computer program is provided that comprises instructions which, when the program is executed by a computer, cause the computer to carry out the methods as described herein.

The foregoing paragraphs have been provided as a general introduction and are not intended to limit the scope of the following claims. The described embodiments, along with further advantages, will be more clearly understood by referring to the following detailed description in conjunction with the accompanying drawings.

### BRIEF DESCRIPTION OF THE DRAWINGS

The foregoing and additional objectives, features, and benefits of the present subject matter will become apparent from the following description of illustrative embodiments with reference to the accompanying drawings, wherein like numerals are used to represent like elements, in which:
Fig. 1 is a flow chart of a method for compressing natural language text using a language model and token classifier.
Fig. 2 shows a schematic block diagram of the process of compressing a prompt according to this disclosure.
Fig. 3 depicts a schematic block diagram of the process of token classification and feature extraction in a subset of layers of a pre-trained model for text compression.
Fig. 4 illustrates attention maps with their entropy values for token interactions within a prompt.
Fig. 5 shows a communication example with natural language text compression within a computing system.
Fig. 6 is a block diagram of the internal components of a computing system for natural language text compression.

### DETAILED DESCRIPTION

The present disclosure relates to methods and systems for natural language compression, which is particularly helpful for large language models (LLMs) but can be applied wherever reducing the size of text inputs while preserving the information of the text input is sensible.

LLMs are increasingly used in various applications, such as coding assistance, documentation generation, and chatbots. However, these models face significant challenges when processing lengthy text inputs. The computational cost, e.g., in terms of energy and time resources, increases with the size of the input text. Additionally, LLMs have inherent limitations on the maximum text length they can handle (input and output), leading to performance degradation when these limits are exceeded. Existing methods for text compression often involve complex, resource-intensive processes that are unsuitable for real-time applications and require fine-tuning, which limits their adaptability and increases computational costs.

Nowadays the use of LLMs is omnipresent. LLMs can be used in a wide range of applications such as coding, producing documentation, chatbots, processing large text documents to retrieve relevant information that a user might need, summarization of texts, and the like. The need for LLMs processing larger inputs is always increasing. For example, bigger chunks of code are needed to correctly generate coding documentation or bigger chat histories have to be processed in the LLM to generate an appropriate response.

Inputting larger text documents to an LLM comes with certain caveats. LLMs are expensive both energy-wise and money-wise, with those costs growing (in the best-case scenario) proportionally to the length of their input. On top of the sustainability challenges, it should be considered that they require more time to process larger documents. Finally, even with infinite energy and time resources, they can only handle up to a certain text length limit as inputs and exceeding this limit deteriorates the performance.

This disclosure provides a method and system for natural language text compression that addresses these challenges by efficiently reducing the size of text inputs for LLMs without sacrificing output quality. The method involves processing the text with a subset of layers from a pre-trained language model, extracting internal token representations, and applying a token classifier to determine which tokens can be removed. This approach eliminates the need for fine-tuning and is adaptable to various applications, enhancing the sustainability and speed of language model operations. The system includes a computing system with memory and processing capabilities to execute the method, and a computer program with instructions to carry out the method.

The herein presented solution is capable of compressing the inputs of the LLM or generally of any text provided. Since language contains a lot of redundancy, as much as possible redundancy is removed to compress large text inputs before being, e.g., stored or used by the LLM. In the use case of LLM, the quality of the LLM's response does not deteriorate as only redundant information is removed.

The compression mechanism does not require access to internal parameters of the LLM or knowledge of later purposes after storing the compressed text. Currently, there are approaches that reduce the number of tokens (i.e., words, part of words, etc.) progressively by either fusion or removing tokens when passing from one layer of the LLM to the next one. However, such a solution requires a specifically fine-tuned large LLM and cannot be applied to closed models, accessed via API calls, such as the ones provided by OpenAI, Anthropic and other platforms. Therefore, we propose a method which only operates only on the input tokens.

The compression according to the solution is achieved so that it can be reusable for any application. Many current approaches, given a user's query, compress a document by removing the parts of the document which are irrelevant to the query. In this case, the compressed document is only usable for the specific query and any new query will require to compress the document again. The herein presented compression method is, in contrast query agnostic.

Query agnostic current approaches propose compressing the input text by using a second smaller in scale LLM as pre-processing method. This smaller model is a pretrained language model (e.g., mBERT, xlm-RoBERTa) that is further fine-tuned on a dataset containing text in which words/tokens are labeled as "necessary" or "can be safely removed" without affecting the performance of the large LLM. However, the employed smaller pre-processing LLM is far from small (e.g., xlm-RoBERTa contains 355 million parameters). On top of that before employment, the pre-processing LLM needs to be fine-tuned, which is cost intensive in terms of processing resources. Reducing the cost is, however, an important factor for more sustainable and real-time use compression. The herein presented solution uses only a fraction of a smaller model to compress the text document and does not necessitate expensive fine-tuning of LLM parameters.

The basic idea presented herein relies on, instead of evaluating the complete smaller model, stopping at an earlier layer and only considering this subset of layers. From that stopping layer, as well as previous ones which were already evaluated, important features per token can be determined. Those features are the input to a standard machine-learning classifier which ultimately decides the tokens to be removed from the final compressed document.

Therefore, any LLM model with an architecture using an attention mechanism can be used for the herein presented compression method. No finetuning of its parameters is required, i.e. it can be used "off the self". From a subset of first layers, attentions maps are extracted to compute importance per token features. A classifier trained to decide, given the per token features, if a token should be removed or kept, is then applied. Training and applying such a classifier on the extracted features are orders of magnitude faster and more energy efficient than finetuning the complete smaller model. It can even be performed very fast on a CPU (and even faster on GPU architectures). Moreover, only the part of the smaller model that is needed for attention map extraction is needed to be kept in the memory.

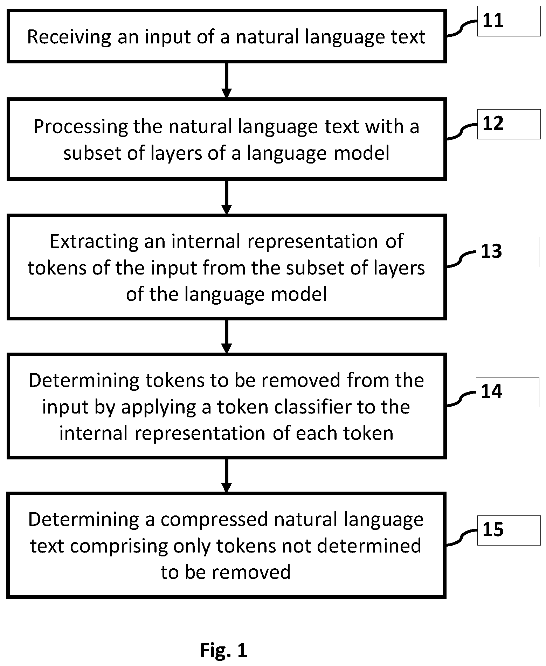

Fig. 1 illustrates an example of a method for compressing natural language text using a language model and token classifier.

The process begins with box 11, which involves receiving an input of a natural language text. This is the initial stage where the text data is obtained (e.g., from a user) for subsequent processing. Examples of natural language text inputs include documents, chat logs, or any text data requiring compression.

Box 12 involves processing the natural language text with a subset of layers of a language model. Advantageously, the subset of layers can only comprise a very limited number (e.g., 4, 5, 6 or the like) of layers of the total number of layers (e.g., 24, 30, or even more) of the language model. This processing utilizes specific layers of the language model to analyze the text, aiding in understanding its structure and meaning. The language model may be a pre-trained machine learning model and may specifically be a transformer-based language model, such as BERT, GPT, or similar architectures.

Following this, box 13 involves extracting an internal representation of tokens from the input using the subset of layers of the language model. This extraction captures key features of each token, which are essential for the subsequent classification process. The features may include values such as minimum, maximum, mean, standard deviation, and entropy, determined per column or per row of the attention maps.

In box 14, the method determines tokens to be removed from the input by applying a token classifier to the internal representation of each token. The token classifier evaluates the importance of each token and identifies those that can be omitted without losing significant information. The token classifier may be a machine learning classification model, such as a random forest model or the like, and may be trained in a supervised manner by annotating tokens to be removable while conveying the information provided by the natural language text. Additionally, the classifier may be continuously trained based on feedback from the language model.

Finally, box 15 involves determining a compressed natural language text comprising only tokens not determined to be removed. This final process results in a reduced text size while maintaining the primary information, thus achieving the goal of text compression. The token classifier may provide a probability of a token being required to convey the information provided by the natural language text. Tokens may be removed if the probability of them being required to convey the information of the input text is smaller than a defined threshold, which may be set by a user or automatically defined depending on the intended usage of the compressed text. For example, if the compressed text is intended to be used for a first purpose, e.g., storage, a different threshold may be automatically applied than if the compressed text is intended to be used for a second purpose, e.g., transmission over a network to a large language model.

As mentioned above, the language model used in the method may be a pre-trained machine learning model. Pre-trained models are advantageous because they have already been trained on large datasets, allowing them to understand and process natural language effectively. Examples of pre-trained models include BERT, GPT, and RoBERTa, which can be fine-tuned for specific tasks.

The language model may specifically be a transformer-based language model. Transformer models, such as BERT and GPT, utilize attention mechanisms to process input data, making them highly effective for natural language processing tasks. These models can handle complex language structures and are widely used in applications like text summarization, translation, and sentiment analysis.

The internal representation of the input may be extracted by extracting features based on the attention maps generated by the output of at least one subset of layers in the transformer-based language model when the transformer-based language model processes the tokens of the input. Attention maps are a crucial component in transformer-based language models, providing insights into how different parts of the input text relate to each other. These maps visualize the attention scores, which indicate the importance of each token in the context of other tokens. In the context of the method described in Fig. 1, attention maps are used to extract features for each token during the process outlined in box 13. By analyzing the attention scores, the model can determine which tokens are more relevant to the overall meaning of the text. Features such as minimum, maximum, mean, standard deviation, and entropy can be derived from the attention maps, either per column or per row (or also by evaluating diagonals), to quantify the significance of each token. This information is then utilized by the token classifier in box 14 to make informed decisions about which tokens can be removed without compromising the integrity of the compressed text. The use of attention maps thus enhances the model's ability to efficiently compress text while preserving essential information.

Transmitting the compressed natural language text to a pre-trained large language model as input allows for efficient processing by the large language model, reducing computational costs and improving processing speed. The compressed text retains the essential information needed for the model to generate accurate outputs. Alternatively, the compressed natural language text may be used for efficient storage or efficient transmission over a network.

**In** some embodiments, the token classifier may be a machine learning classification model. Machine learning models, such as decision trees, support vector machines, or generally neural networks, can be used to classify tokens based on their extracted features. These models are trained to identify which tokens can be safely removed without losing critical information. In some further embodiments, the token classifier may be a random forest machine learning model. Random forest models are ensemble learning methods that use multiple decision trees to improve classification accuracy. They are robust to overfitting and can handle large datasets with high dimensionality, making them suitable for token classification tasks.

As said, the training of the token classifier may happen in a supervised manner, e.g., by annotating tokens to be removable while conveying the information provided by the natural language text. Supervised training involves using labeled data to teach the classifier which tokens are essential and which can be removed, ensuring that the compressed text maintains its informational value. The token classifier may be continuously trained based on feedback from the language model. Continuous training allows the classifier to adapt to new data and improve its performance over time. Feedback from the language model can be used to refine the classifier's decision-making process, enhancing its accuracy and reliability. The token classifier may provide a probability of a token being required to convey the information provided by the natural language text. This probability helps determine the importance of each token, guiding the removal process to ensure that only non-essential tokens are discarded.

For example, during inference of the classifier, each token may receive a probability value, which represents how likely it is for the token to be removed. These probabilities may provide a ranking of the tokens, ranging from the most likely token to be removed to the least likely one. Depending on a required compression rate, a smaller or a bigger set of the least likely to be removed tokens can be selected. Of course, increasing the compression rate carries the risk that necessary information is removed. Hence, a corresponding threshold should be selected with care.

The method may further comprise, for determining the compressed natural language text, removing, in response to the probability of the token being required to convey the information being smaller than a threshold, the token from the natural language text. The threshold may be definable by a user or automatically defined depending on the intended usage of the compressed natural language text. This flexibility allows users to tailor the compression process to their specific needs, balancing information retention with text size reduction.

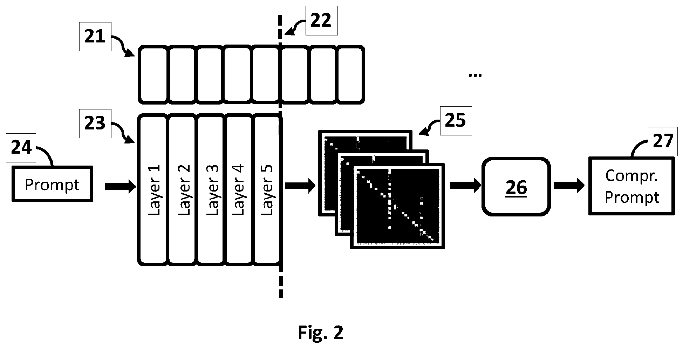

Fig. 2 illustrates a schematic block diagram of the process for compressing a prompt using a pre-trained model 21, which is cut-off at a cut-off line 22, e.g., only a subset of the layers (e.g., the first layers 23) of this pre-trained model 21 are used according to this disclosure.

The process begins with a prompt 24, which serves as the input text for compression. This prompt is fed into the first layers 23 of a pre-trained model 21. The pre-trained model 21 is utilized to process the input text, but only a subset of its layers, indicated by the cut-off line 22, is used for the compression. This approach leverages the initial layers of the model to efficiently analyze the text without processing the entire model.

Attention maps 25 are generated from these initial layers, capturing the relationships and importance of different tokens within the prompt. These attention maps serve to understand how different parts of the text interact and which tokens hold significant information. The features extracted from the attention maps may include various statistical measures such as mean value, standard deviation, median, kurtosis, entropy, percentiles, skewness, and the like, which help in quantifying the relevance of each token.

The process then involves classification 26 (with aggregation and feature extraction as pre-processing). This classification component 26 first aggregates the information from the attention maps to extract relevant features for each token. These features are then used to classify tokens, determining which can be removed without losing essential information. The classification may be performed using a machine learning model, such as a random forest, which evaluates the extracted features to make informed decisions about token removal.

Finally, the process results in a compressed prompt 27, which comprises only the tokens deemed necessary after the classification process. This compressed prompt retains the core information of the original input while reducing its size, making it more efficient for further processing by large language models. The compressed prompt can be used in various applications, such as chatbots, document summarization, and coding assistance, where efficient processing of text inputs is required.

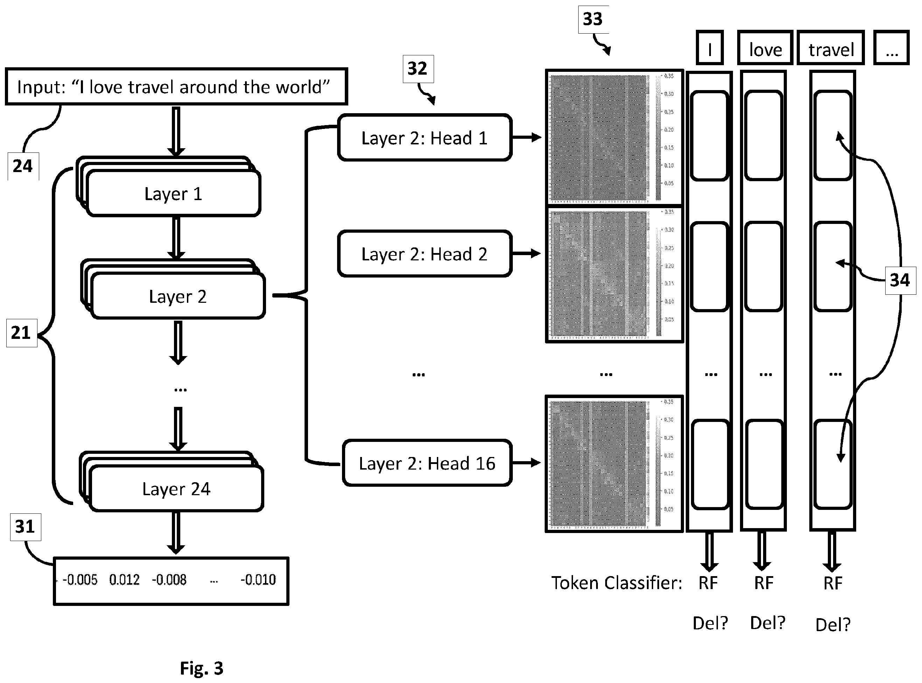

Fig. 3 illustrates a detailed schematic of the process for extracting features from a pre-trained model to classify tokens for deletion, i.e., for text compression.

The process begins with a prompt 24, such as the input text "I love travel around the world," which is fed into a pre-trained model 21. This model processes the input through multiple layers, with the output of the pre-trained model being indicated as component 31. The output may relate to relevance of tokens (e.g., words, partial words, combined words, etc.) in the text or another language processing task.

Within the pre-trained model, internal heads 32 of a subset of layers (e.g., of the first 5, 6, 7, ... layers) are analyzed. In the context of transformer-based models, a "head" refers to one of the multiple attention mechanisms within a single layer of the model. Each head independently computes attention scores, allowing the model to focus on different parts of the input sequence simultaneously. This multi-head attention mechanism enables the model to capture various relationships and dependencies between tokens in the input text

Attention maps 33 are generated by these heads 32 and represent the attention scores that indicate how much focus each token in the input should receive/give relative to other tokens. Each head 32 produces its own attention map, which visualizes the importance of each token in the context of the entire input sequence. These attention maps 33 serve the understanding of the interactions between tokens and are used to extract features that inform the token classification process.

The attention maps 33 are then used to extract features 34 for each token. These features 34 are used for determining the significance of each token in the context of the entire input. The extracted features 34 are fed into a token classifier, which may be implemented as a random forest (RF) model, to evaluate whether each token could be deleted (indicated as "Del?") or retained.

A threshold may be set by a user or determined according to, e.g., the usage of the compressed text, available processing resource, or the like. The threshold serves as a decision boundary for determining whether a token should be retained or removed from the input text. In the context of the token classification process depicted in Fig. 3, the token classifier assigns a probability to each token, indicating the likelihood that the token is necessary to convey the information provided by the natural language text. If the probability assigned to a token by the classifier is below the threshold, the token is considered non-essential for the information and is marked for removal. Conversely, if the probability is above the threshold, the token is retained in the compressed text.

This mechanism allows for flexible and adaptive text compression, as the threshold can be adjusted to balance the trade-off between compression rate and information retention. By setting the threshold appropriately, users can control the level of compression to suit specific application requirements, ensuring that the compressed text maintains the necessary information for accurate processing by large language models.

The classification process finally results in a decision for each token, guiding the compression of the input text by removing tokens deemed unnecessary while preserving the essential information. This approach enhances the efficiency of processing by large language models, reducing computational costs, and improving processing speed.

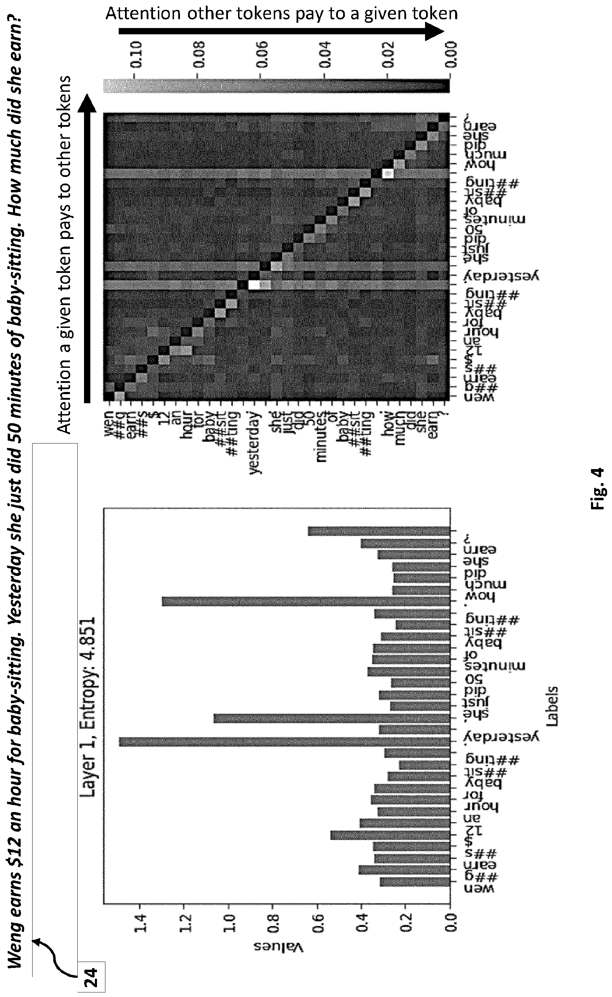

Fig. 4 provides a visual representation of the attention dynamics for an example prompt 24. The left part of the figure presents a bar graph that quantifies the entropy of attention distribution for each token in the input text. Entropy is a measure of uncertainty or variability in the attention scores, providing insights into how evenly or unevenly attention is distributed across tokens. A higher entropy value suggests a more uniform distribution of attention, while a lower value indicates that attention is concentrated on specific tokens. This bar graph helps in understanding the variability in attention allocation among the tokens, which is crucial for determining the significance of each token in the context of the entire input.

The right part of Fig. 4 displays an attention map, which shows the attention each token pays to other tokens in the sequence. The horizontal axis represents the tokens receiving attention, while the vertical axis represents the tokens providing attention. The intensity of the shading in the map indicates the level of attention, with darker shades representing higher attention scores. This map helps in understanding the relationships and dependencies between different tokens in the text, offering a comprehensive view of the attention mechanisms that play within the prompt. Together, these visualizations aid in the analysis and interpretation of token interactions in the context of natural language processing.

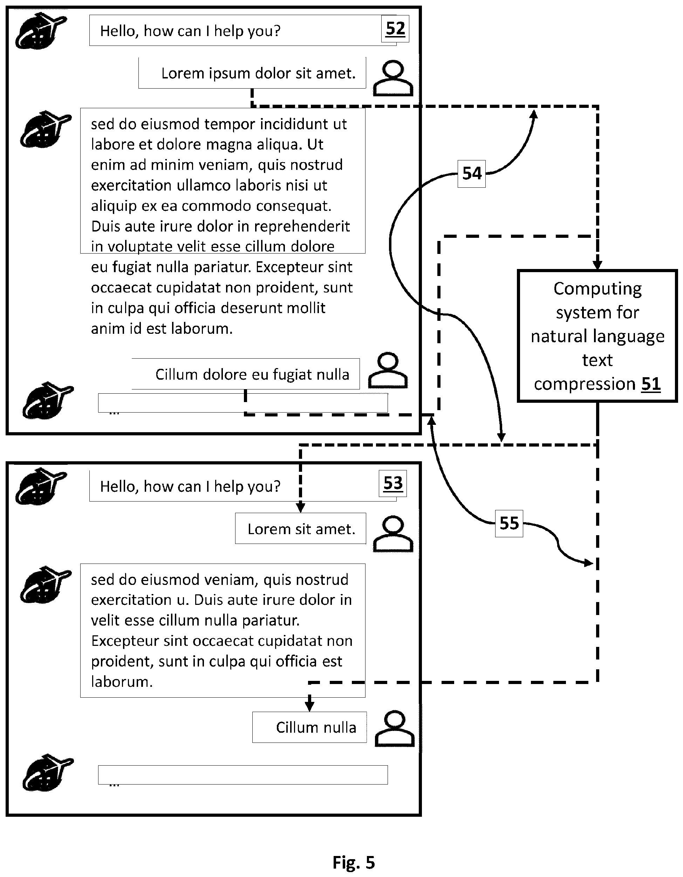

Fig. 5 illustrates a communication example involving natural language text compression within a computing system for natural language processing 51. The original communication 52 includes a conversation with multiple lines of text. The text of the user (right-hand side) serves as the input that requires compression to optimize processing by a large language model (which provides the output on the left-hand side).

For compression, text prompts of the user are fed into the computing system for natural language processing 51. The result of this compression process is shown as compressed communication 53. The compressed communication retains the core elements of the original conversation but with fewer tokens, making it more efficient for further processing.

In particular, arrows 53 indicate the process of compressing the first input, where the original communication 52 of the user is transmitted to the computing system for natural language text compression 51. This system processes the input to reduce its size while retaining essential information as has been described before with respect to Figs. 1 to 4. Arrows 54 then represent the process of compressing a second input, demonstrating the system's capability to handle multiple inputs for compression. The computing system 51 efficiently processes each input, ensuring that the compressed outputs maintain the necessary information for accurate interpretation by large language models.

The herein presented solution has been shown to perform better for providing input to LLMs than using non-compressed texts. Moreover, the efficiency is significantly improved since only a classifier with a limited set of parameters (e.g., a random forest with tree depth of 20 and 100 trees) has to be trained and no fine-tuning of an LLM (e.g., for Lingua2, 355M parameters and a classification layer) is required. The processing time can, e.g., be reduced in inference by a factor of 5, when less than 20% of the LLM layers are used to generate the attention maps.

As can also be seen, compressing the user's input may also have a further effect, namely, a shorter output of the large language model since the output can then be tailored to the relevant information. This further improves the natural language processing, the required transmission resources and the efficiency of the overall natural language compression.

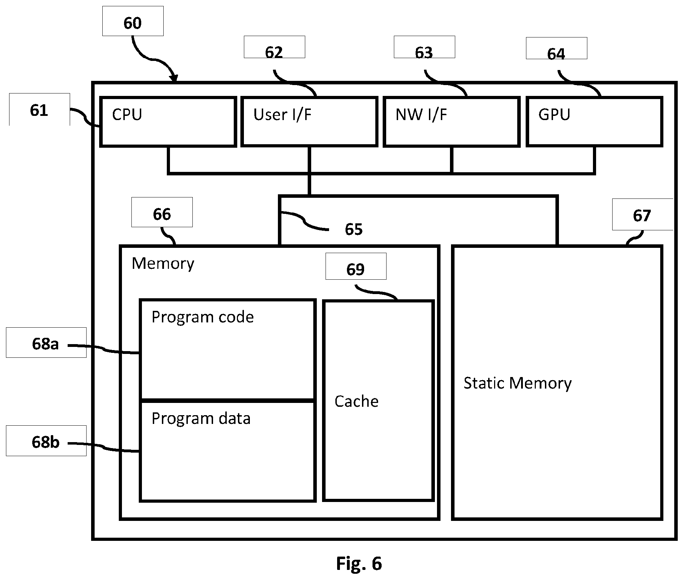

Finally, Fig. 6 is a diagrammatic representation of internal components of a computing system 60 implementing the methods and/or the functionality of one or more of the components as described herein. The computing system 60 includes at least one processor 61, a user interface 62, a network interface 63 and a main memory 66, that communicate with each other via a bus 65. Optionally, the computing system 60 may further include a static memory 67 and a disk-drive unit (not shown) that also communicate with each via the bus 65. A video display, an alpha-numeric input device and a cursor control device may be provided as examples of user interface 62. Furthermore, the computing system 60 may also comprise one or more graphics processing units (GPU) 64.

The GPUs 64 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations.

The main memory 66 may be a random-access memory (RAM) and/or any further volatile memory. The main memory 66 may store program code 68a and may also store additional program data 68b required for providing the functionalities described herein. Moreover, the main memory 66 may also include a cache 69 for caching instructions or temporary data needed for execution of the methods described herein.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A method for natural language text compression comprising:
receiving an input of a natural language text;
processing the natural language text with a subset of layers of a language model;
extracting an internal representation of tokens of the input from the subset of layers of the language model;
determining tokens to be removed from the input by applying a token classifier to the internal representation of each token; and
determining a compressed natural language text comprising only tokens not determined to be removed.

2. The method of claim 1, wherein the language model is a pre-trained machine learning model.

3. The method of claim 2, where the language model is a transformer-based language model.

4. The computing system of claim 3, wherein the internal representation of the input is extracted by extracting features based on the attention maps generated by the output of at least one subset of layers in the transformer-based language model when the transformer-based language model processes the tokens of the input.

5. The method of claim 4, wherein the extracting features comprises determining per column or per row of the attention maps for different layers a value of at least one of minimum, maximum, mean, standard deviation, and entropy.

6. The method of any one of the preceding claims further comprising transmitting the compressed natural language text to a pre-trained large language model as input instead of the natural language text.

7. The method of any one of the preceding claims, wherein the token classifier is a machine learning classification model.

8. The method of claim 7, wherein the token classifier is a random forest machine learning model.

9. The method of claim 7 or claim 8 further comprising training the token classifier in a supervised manner by annotating tokens to be removeable while conveying the information provided by the natural language text.

10. The computing system of any one of claims 7 to 9, wherein the token classifier is continuously trained based on feedback of the language model.

11. The method of any one of the preceding claims, wherein the token classifier provides a probability of a token being required to convey the information provided by the natural language text.

12. The method of claim 11 further comprising, for determining the compressed natural language text, removing, in response to the probability of the token being required to convey the information being smaller than a threshold, the token from the natural language text.

13. The method of claim 12, wherein the threshold is definable by a user or automatically defined depending on an intended usage of the compressed natural language text.

14. A computing system for natural language text compression comprising:
at least one memory storing a subset of layers of a language model and a token classifier; and
at least one processor;
wherein the at least one memory comprises instructions that, when executed by the at least one processor, cause to the at least one processor to execute the method of any one of claims 1 to 13.

15. A computer program comprising instructions which, when the program is executed by a computer, cause the computer to carry out the method according to any one of claims 1 to 13.
